Europäisches Patentamt

European Patent Office

Office européen des brevets

(19)

(11) **EP 1 380 662 A1**

(12) **EUROPEAN PATENT APPLICATION**
published in accordance with Art. 158(3) EPC

(43) Date of publication:
**14.01.2004 Bulletin 2004/03**

(21) Application number: **02705165.5**

(22) Date of filing: **14.03.2002**

(51) Int Cl.[7]: **C22C 21/02**, C22C 21/06,
C22F 1/05, B21J 5/00,
B21J 5/02, B21K 1/26

(86) International application number:
**PCT/JP2002/002397**

(87) International publication number:
**WO 2002/083963 (24.10.2002 Gazette 2002/43)**

(84) Designated Contracting States:
**AT BE CH CY DE DK ES FI FR GB GR IE IT LI LU
MC NL PT SE TR**

(30) Priority: **09.04.2001 JP 2001110092**

(71) Applicants:
• **ASAHI TEC CORPORATION
Ogasa-gun Shizuoka-Ken 439-8651 (JP)**
• **Hoei Industries Co., Ltd.
Nagoya City, Aichi Pref, 466-0015 (JP)**

(72) Inventors:
• **MATSUMOTO, Masaharu,
c/o ASAHI TEC CORPORATION
Ogasa-gun, Shizuoka 439-8651 (JP)**
• **WATANABE, Masatoshi
Inabe-gun, Mie 511-0205 (JP)**
• **MACHINO, Daisuke
Inabe-gun, Mie 511-0203 (JP)**

(74) Representative: **Paget, Hugh Charles Edward et al
MEWBURN ELLIS
York House
23 Kingsway
London WC2B 6HP (GB)**

(54) **ALUMINAUM ALLOY FOR CASTING/FORGING, ALUMINUM CAST/FORGED PRODUCT AND PRODUCTION METHODS**

(57) An aluminum casting forged product is provided by using an aluminum alloy for casting forge including a useless raw material for forging such as flash as a raw material and by controlling a weight percentage of an alloy element such as silicon, magnesium, copper, and manganese; the product having an enhanced fluidity, and an improved castability, with retaining a sufficient strength, preventing useless intermetallic compounds from forming, restraining deterioration due to oxidation and corrosion, and further improved strength by a forging effect: and there is also provided a simple manufacturing method, with a high yield and high productivity. An aluminum casting forged product of high tensile strength, high proof, and elongation, higher mechanical properties than those of the conventional casting forged product, high corrosion resistance, and high quality without defects, and being low in cost is also obtainable as a thick-wall aluminum product.

FIG.1

**Description**

Technical field

The present invention relates to an aluminum alloy for casting forge and an aluminum casting forged product that is used for a vehicular part or the like and is less costly, and a manufacturing method for the aluminum casting forged product. More particularly, it relates to an aluminum alloy for casting forge that is used to manufacture vehicular suspension parts which are required to be light in weight to improve fuel economy of an automobile and can use useless forging materials such as flash produced in a forging process, an aluminum casting forged product that has high mechanical properties and contains particular amounts of silicon, magnesium, copper, and manganese, and a manufacturing method for the aluminum casting forged product.

Background Art

It is said that global warming, which is one of global environmental problems, is greatly affected by carbon dioxide produced by all human activities, and an decrease in carbon dioxide discharged from factories and electric power plants and a decrease in fuel consumption of automobiles are strongly demanded all over the world. At the third conference of the United Nations Framework Convention on Climate Change, so-called Global Warming Prevention Conference COP3, held in Kyoto in 1997, Japan promised that the emission of gas causing greenhouse effect which mainly contains carbon dioxide will be decreased by 6% on average of values in 2008 through 2012 as compared with 1990.

Based on this promise, regarding the fuel consumption rate of automobiles, the target reference value of fuel consumption rate under vehicle weight classification was determined with the target fiscal year being fiscal 2010 for gasoline engine and fiscal year 2005 for diesel engine. Also, in the taxation system, measures were taken to treat low-pollution cars favorably. In the future, as purchaser's and user's understanding of environmental problems increases , auto manufacturers will strongly be required to promote technology development to improve fuel economy and to develop an automobile having improved fuel economy. Such development will be needed to win competition among auto manufactures.

The measures for improving fuel economy of automobiles include the use of a new power source such as fuel cell, natural gas, and electricity, or the hybrid use thereof , the technical improvement in a prime mover system such as a lean fuel engine and a direct injection engine, and the decrease in running resistance due to improvement in loss of power transmission system and improvement in vehicle body contours. Among these measures, measures that are most effective and capable of being taken together with any other technologies are reduction in weight of automobiles. If the weight of the automobile itself is reduced, the load on the power source is decreased, and the amount of material used can be reduced for any power source.

The reduction in weight of suspension parts of automobiles contributes to the improvement in drivability and riding quality of automobile, so that in reducing the weight of automobile , the suspension parts have precedence.

The reduction in weight of automobile is accompanied by a problem of increased cost that is to be solved. The weight reduction technology is broadly divided into a structure design technology and a material technology. In comparison with the drastic improvement in vehicle body structure and construction elements, the change of material used is measures for reducing the weight that can be implemented easily. However, such a material for reducing the weight is generally expensive. As a material for reducing the weight, resin materials such as FRP, thinned iron sheets using high tension steel sheet, aluminum alloys, magnesium alloys, titanium alloys, ceramics, metallic compounds materials, intermetallic compounds, or the like can be cited. Among these materials, aluminum alloys have fewest drawbacks in terms of corrosion resistance etc. and are lowest in cost and easiest to use although being higher in cost than iron.

Aluminum alloys, having a density about one-third that of iron, have already been used for many easy-to-manufacture castings such as engine cylinder heads and engine cylinder blocks. These castings are manufactured by high-speed injection molding, a so-called die casting method, and thus can be manufactured at a relatively low cost with high production efficiency. However, castings having large thickness and high strength cannot be produced. For the suspension parts required to reduce the weight as described above, a failure due to insufficient strength presents an important problem relating to safety, so that there has been a problem of difficulty in applying the casting.

A material used for a suspension part such as a steering knuckle and a suspension arm is required to have high corrosion resistance, sufficient properties such as strength and elongation, and few defects. As such a material, an A6061 alloy forging, an AC4CH alloy High Pressure Die Casting Process (low-speed injection molded product), or the like that meet the requirements has already been used. However, these materials still have an unsolved problem of high cost, so that the application thereof is extremely limited at present.

The reasons why a so-called pure aluminum forging such as the conventional A6061 alloy forging is high in cost is that the number of manufacturing processes is large, that the raw material for forging itself is expensive, waste such as flash is caused during the manufacturing process , and that a useless material such as flash cannot be recycled as a raw material for forging. Also, for a squeeze casting, because of a large number of processes and a low injection speed, the productivity is low and a low cost cannot be attained.

Thus, in particular, in order to reduce the weight of a vehicular part, an aluminum product having high corrosion resistance, strength, and elongation, no defects, and a low cost has been demanded. To meet this demand, various improved aluminum alloys have so far been proposed as a material for manufacturing such an aluminum product.

According to JP-A-5-59477, an aluminum alloy for forging in which the coarseness of crystal grains is restrained by controlling the composition, whereby high mechanical properties are attained has been proposed. According to this disclosure, the composition is adjusted so as to contain 1.0 to 1.5 wt% of silicon, 0.8 to 1.5 wt% of magnesium, 0.4 to 0.9 wt% of copper, 0.2 to 0.6 wt% of manganese, 0.3 to 0.9 wt% of chromium, and the like. Thus, the strength of matrix is improved, and the coarseness of crystal grains is restrained, by which a tensile strength of 40 kgf/mm$^2$ is realized.

However, for this aluminum alloy, although the strength is increased, there arises a new problem in that a low cost cannot be attained, and the corrosion resistance is low because a larger amount of copper is contained than the conventional raw material for forging (A6061 alloy) , and also the fluidity decreases so that the castability is poor because much magnesium is contained.

Also, according to JP-A-7-258784, an aluminum alloy material for forging having high castability and strength has been proposed. According to this disclosure, molten metal of an aluminum alloy material in which the composition is adjusted so as to contain 0.8 to 2.0 wt% of silicon, 0.5 to 1.5 wt% of magnesium, 0.5 to 1.0 wt% of copper, 0.4 to 1.5 wt% of manganese, 0.1 to 0.3 wt% of chromium, and the like is used, and after continuous casting is performed while controlling the cooling rate in the solidification process, soaking is performed. Subsequently, hot forging is performed, and thereafter solution heat treatment and further aging treatment are done. For the aluminum alloy forging thus obtained, a casting crack, which has been formed in the case where the conventional A6061 alloy is used as a raw material, is not formed when the aluminum alloy forging is cast into a shape close to the final product.

In this proposal, although the castability is improved, a low cost cannot be attained yet as compared with the conventional raw material for forging (A6061 alloy) , and also the corrosion resistance is low because much copper is contained, so that there remains anxiety when this material is used for a suspension part. Also, there arises a problem in that the fluidity decreases because much magnesium is contained, and the above-described rigorous control is needed in the casting process, so that the manufacturing cost rather increases.

Further, according to JP-A-8-3675, an aluminum alloy for forging having high mechanical properties and a low cost has been proposed. According to this disclosure, an aluminum alloy in which the composition is adjusted so as to contain 0.6 to 3.0 wt% of silicon, 0.2 to 2.0 wt% of magnesium, 0.3 to 1.0 wt% of copper, 0.1 to 0.5 wt% of manganese, 0.1 to 0.5 wt% of chromium and the like, and also contain 1.5 wt% or more of Mg$_2$Si is forged with an upsetting ratio of 10 to 50%, by which no hot crack is formed at the time of casting, and the strength after forging can be improved.

In this proposal, although a shape close to the final product can be formed at the time of casting, and the manufacturing cost can be reduced because forging can be performed by omitting an extrusion process, there arises a problem in that the strength decreases because an excessive amount of manganese is contained. Manganese restrains the growth of aluminum crystal grains and keeps the structure fine, so that it is an element for improving the strength. If the content thereof is high, however, intermetallic compounds are liable to be yielded, so that the strength is rather decreased.

As described above, an aluminum product that has high corrosion resistance and mechanical properties such as strength and elongation, is capable of being used for vehicular suspension parts without anxiety, and is low in cost has been demanded. However, a suitable aluminum product has not been proposed.

The present invention has been achieved in view of the above situation, and accordingly an object thereof is to solve the problems with the related arts and, more particularly, to provide an aluminum casting forged product that has high tensile strength, proof stress, and elongation as a thick-wall aluminum product, has higher mechanical properties than those of the conventional casting forged product, has high corrosion resistance and high quality without defects, and is low in cost, and a manufacturing method for the aluminum casting forged product. Another object of the present invention is to provide a lightweight and less-costly vehicular suspension part brought about by the above-described aluminum casting forged product and the manufacturing method therefor, and thereby to decrease the fuel consumption of an automobile etc. and thus to reduce the amount of emitted carbon dioxide in order to contribute to environmental protection such as the prevention of global warming.

Disclosure of Invention

The inventors conducted various studies on the raw material and manufacturing method for a thick-wall aluminum product to solve the above problems, and as a result, they found that the above objects could be achieved by an aluminum casting forged product in which the fluidity is enhanced and the castability is improved while a sufficient strength is provided, the formation of useless intermetallic compounds is prevented, the deterioration due to oxidation and the corrosion are restrained, and the strength is further improved by the forging effect by using an aluminum alloy for casting forge including a useless raw material for forging such as flash as a raw material and by controlling the weight percentage of alloy element such as silicon, magnesium, copper, and manganese, and by a manufacturing method in which the manufacturing process is simpler, and the yield and productivity are high.

According to the present invention, there is provided an aluminum alloy for casting forge which is cast into a raw material for forging, characterized in that it contains 0.2 to 2.0 wt% of silicon, 0.35 to 1.2 wt% of magnesium, 0.1 to 0.4 wt% of copper, and 0.01 to 0.08 wt% of manganese.

By using this aluminum alloy for casting forge, vehicular suspension parts can be manufactured properly.

Also, there is provided a preformed product which is cast by using the above-described aluminum alloy for casting forge, and of which compression ratio is 18 to 60% when the shape of final product is taken as 100%.

Also, according to the present invention, there is provided an aluminum casting forged product which is manufactured by forging after being cast, characterized in that it contains 0.2 to 2.0 wt% of silicon, 0.35 to 1.2 wt% of magnesium, 0.1 to 0.4 wt% of copper, and 0.01 to 0.08 wt% of manganese.

The aluminum casting forged product can be easily applied as the vehicular suspension parts.

Further, according to the present invention, there is provided a manufacturing method for an aluminum casting forged product containing 0.2 to 2.0 wt% silicon, 0.35 to 1.2 wt% magnesium, 0.1 to 0.4 wt% copper, and 0.01 to 0.08 wt% manganese, characterized in that the method comprises a molten metal step of obtaining molten metal by melting a material for forging at a temperature of about 680 to 780°C; a casting step of obtaining a raw material for forging by casting the molten metal at a mold temperature of about 60 to 150°C; a rough forging step of obtaining a rough forging by heating the raw material for forging to a surface temperature of about 380 to 520°C and forging it; a finish forging step of obtaining a finished forging by heating the rough forging to a surface temperature of about 380 to 520°C and forging it; and a clipping flash step of obtaining a finial product by removing flash from the finished forging.

It is preferable that the material for forging include useless flash produced at the time of forging as a raw material.

Also, it is preferable that the compression ratio of the shape of raw material for forging be 18 to 60% when the shape of final product is taken as 100%.

By using this manufacturing method for an aluminum casting forged product, a vehicular suspension part can be manufactured suitably.

Brief Description of the Drawings

Fig. 1 is a side view showing one example of an aluminum casting forged product in accordance with the present invention.

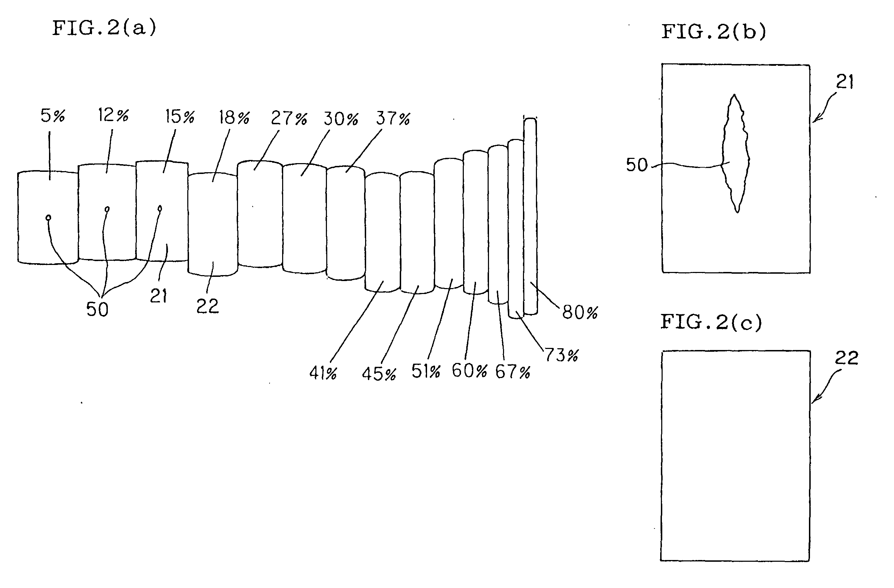

Figs. 2(a) to 2(c) are views showing one example of a manufacturing method for an aluminum casting forged product in accordance with the present invention, Fig. 2(a) being a schematic explanatory view showing a difference in shape of a raw material product for forging (columnar specimen) with each compression ratio at the time of casting, Fig. 2(b) being an enlarged side view showing one example of a product in which an internal defect is produced at the time of casting, and Fig. 2(c) being an enlarged side view showing one example of a product in which no internal defect is produced at the time of casting.

Fig. 3 is a sectional view of a raw material for forging for explaining compression ratio.

Best Mode of Carrying Out the Invention

Hereunder, embodiments of an aluminum alloy for casting forge, an aluminum casting forged product, and a manufacturing method for an aluminum casting forged product in accordance with the present invention will be described in detail. The present invention is not construed by being limited to these embodiments, and various changes, modifications, and improvement can be made based on the knowledge of those skilled in the art as far as such changes, modification or improvements within the scope of the invention.

The present invention relates to an aluminum alloy for casting forge which includes useless flash produced at the time of forging as a raw material, and contains predetermined minute amounts of metals; an aluminum casting forged product obtained by melting and casting the above-described aluminum alloy for casting forge to obtain a raw material for forging having a compression ratio of 18 to 60% of the final product, and by forging the raw material and thereafter removing flash to obtain a final product; and a manufacturing method for the above-described aluminum casting forged product.

The present invention is characterized in that, of the metals contained in minute amounts in an aluminum casting forged product, in particular, magnesium is contained with a weight percentage of 0.35 to 1.2, and copper is contained with a weight percentage of 0.1 to 0.4, that is, these two elements are contained with a lower percentage than that of the conventional product. By such a composition, while the mechanical strength is enhanced, the increase in corrosion resistance is realized, so that rusting scarcely occurs. Therefore, the aluminum casting forged product in accordance with the present invention can be used suitably as a vehicular suspension part that is used in harsh environments.

Also, the present invention is characterized in that useless flash always produced in the usual forging process is reused, and also the raw material is melted and preformed by casting into a shape that is not close to the shape of the final product and then forging is performed, by which a sufficient forging effect is achieved, and thus a product having a strength higher than that of the conventional forging is obtained while the manufacturing process is simplified as compared with the usual forging process . By doing this, despite the fact that the product has a high strength, the cost of raw material is saved, and the cost of manufacturing process is also reduced, so that a decrease in manufacturing cost can be achieved. Therefore, the aluminum casting forged product thus manufactured is widely used, for example, as an automobile suspension part, more particularly, as a lightweight aluminum wheel etc. , so that the present invention can contribute to environmental protection by the above-described recycling of raw material and the improved fuel economy due to the reduction in weight of automobiles.

The following will be a detailed description of the aluminum alloy for casting forge and the aluminum casting forged product in accordance with the present invention.

The principal metals contained in minute amounts in the aluminum alloy for casting forge and the aluminum casting forged product in accordance with the present invention are silicon, magnesium, copper, and manganese.

Silicon serves to enhance the fluidity and to improve the casting defect by being contained. Also, it precipitates $Mg_2Si$ when it coexists with magnesium that contributes to the improvement in mechanical properties such as elongation, tensile strength, and proof stress. In the present invention, since flash discharged from the forging process are melted as a raw material to obtain molten metal, it is necessary to contain silicon that contributes to the enhancement of fluidity and the improvement in casting defect that relate to the castability. However, if too much silicon is contained, coarse particles of silicon crystallize, with the result that the mechanical properties such as tensile strength are rather decreased.

It is preferable that 0. 2 to 2.0 wt% silicon be contained in the aluminum alloy for casting forge and the aluminum casting forged product. If the content of silicon is less than 0.2 wt%, the castability of molten metal undesirably decreases, and thus a crack is formed at the time of casting. If the content of silicon is more than 2.0 wt%, the forgeability undesirably decreases, and thus an internal defect etc. are liable to be produced.

Magnesium precipitates $Mg_2Si$ in a matrix when it coexists with silicon, and improves the mechanical properties such as elongation, tensile strength, and proof stress, by being contained therein. Since the present invention provides an aluminum casting forged product that is substituted for the conventional forging though being low in cost, the strength higher than that of the conventional forging is indispensable, so that magnesium must be contained. However, even if much magnesium is contained, there is no increase in strength, and if too much magnesium is contained, since magnesium is an element liable to be oxidized, the oxidation of molten metal is accelerated, so that the fluidity decreases, and thus a casting defect is liable to be produced. Also, the corrosion resistance decreases, so that the product cannotwithstand harsh service environments. Therefore, a rather low content of magnesium is preferable.

It is preferable that 0.35 to 1.2 wt% magnesium be contained in the aluminum alloy for casting forge and the aluminum casting forged product. If the content of magnesium is less than 0.35 wt%, the amount of precipitation of $Mg_2Si$ is undesirably insufficient, so that the strength is insufficient. If the content of magnesium is more than 1.2 wt%, in addition to the insufficient strength, the hardening sensitivity decreases, and thus a forging defect is liable to be produced. As a result, the quality as a forged product decreases, and the mechanical properties also decrease.

Copper is an element that can improve the strength by being contained. For the forging containing copper, an Al-Cu or Al-Cu-Mg based precipitate yielded by so-called aging treatment, in which the forging is left at ordinary temperature after being cooled and crystals are precipitated for a long period of time, can be obtained. Thereby, the strength improving action of the precipitated $Mg_2Si$ is accelerated, by which the strength is increased. In the present invention, since a strength higher than that of the conventional forging is indispensable, it is preferable that copper be contained. However, in the case where an application to a product in which corrosion resistance is regarded as most important, for example, a vehicular suspension part is considered, since copper is liable to be oxidized, if too much copper is contained, the forged product is easily corroded, so that it is important that a rather low content of copper be contained.

It is preferable that 0.1 to 0.4 wt% copper be contained in the aluminum alloy for casting forge and the aluminum casting forged product. If the content of copper is less than 0.1 wt%, undesirably copper does not contribute to the improvement in strength. If the content of copper is more than 0.4 wt%, the corrosion resistance undesirably decreases, so that the forged product is liable to rust, and thus the strength cannot be maintained for a long period of time.

Manganese is an element that restrains the recrystallization of aluminum alloy and the growth of crystal grains by being contained. Therefore, by containing manganese, the structure in the aluminum alloy is kept fine, and the strength is maintained. In the present invention, since it is necessary to maintain the mechanical properties such as elongation, tensile strength, and proof stress over a long period, a minute amount of manganese must be contained. However, if too much manganese is contained, the workability decreases at the time of forging, and also intermetallic compounds are yielded, so that a decrease in mechanical properties, especially elongation, is found.

It is preferable that 0.01 to 0.08 wt% manganese be contained in the aluminum alloy for casting forge and the aluminum casting forged product . If the content of manganese is less than 0.01 wt%, the strength is undesirably difficult to maintain. If the content of manganese is more than 0.08 wt%, the forgeability undesirably decreases, so that a defect is liable to be produced.

The metals contained in minute amount in the aluminum alloy for casting forge and the aluminum casting forged product in accordance with the present invention are as described above, and the balance is aluminum.

As a raw material for obtaining the aluminum alloy for casting forge having this composition, useless flash produced easily in the conventional forging process can be utilized. For example, according to the Japanese Industrial Standards, the specified composition of A6061 alloy, which is suitably used for conventional forging is 0.4 to 0.8 wt% silicon, 0.7 wt% or less iron, 0.8 to 1.2 wt% magnesium, 0.15 to 0.4 wt% copper, and 0.04 to 0.35 wt% chromium, the balance being aluminum. Therefore, when useless flash of, for example, A6061 alloy are used, the composition can be adjusted to that of the aluminum alloy for casting forge of the present invention without greatly changing the composition.

Conventionally, flash produced from the forging process have been merely recovered and reused as an ingot for an inexpensive casting, and have not been recycled as a raw material for an expensive forging. In the present invention, the recycling of useless flash produced from the forging process as a raw material for forging, which account for about 30% of the generally used raw material, is realized, by which the cost of raw material can be reduced.

Next, the manufacturing method for the aluminum casting forged product in accordance with the present invention will be described.

As described above, it is preferable that useless flash produced at the time of forging be used as a raw material. The raw material is adjusted so as to make the resulting composition to form the intended aluminum alloy containing 0.2 to 2.0 wt% silicon, 0.35 to 1.2 wt% magnesium, 0.1 to 0.4 wt% copper, and 0.01 to 0.08 wt% manganese by preparing metals that are insufficient using pure metals or by mixing other aluminum alloys. At this time, it is preferable that unavoidable impurities be not contained if possible.

The raw material is put in a melting furnace and is heated to a temperature of about 680 to 780°C to be melted, and then is put in a holding furnace where degassing treatment and deoxidizing treatment are done, by which molten metal is obtained. The molten metal is molded by using a casting apparatus, by which a raw material for forging is obtained.

At this time, the temperature of mold is preferably controlled so as to be about 60 to 150°C. Also, the mold preferably has a shape such that the compression ratio is about 18 to 60% when the shape of final forged product is taken as 100% because the strength is increased by the subsequent forging and the forging process can be made simpler. By setting the compression ratio at about 18 to 60%, the strength improving effect due to forging and the reduced cost due to simplified forging process are balanced.

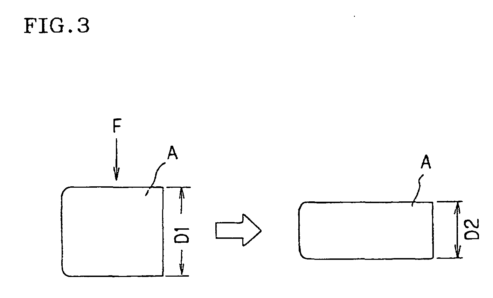

Herein, the compression ratio means a value representing the degree of working. For example, as shown in Fig. 3, when a material A with an initial thickness of D1 is worked by a load F and the thickness is changed to D2 after working, the compression ratio is expressed by the following equation.

$$R[\%] = (D1 - D2)/D1 \times 100 \qquad (D1>D2)$$

However, when the thickness D2 after working is larger than the initial thickness D1, the compression ratio is expressed by the following equation.

$$R[\%] = (D2 - D1)/D1 \times 100 \qquad (D2>D1)$$

In the present invention, the fact that a raw material for forging having a shape such that the compression ratio is about 18 to 60% when the shape of final forged product is taken as 100% is obtained by casting means the fact that a raw material for forging having a shape such that the compression ratio determined using the thickness of each portion of the raw material for forging and the thickness of each corresponding portion in a final product when a final product is obtained by forging the raw material for forging is about 18 to 60% in each portion is obtained by casting.

In the aluminum casting forged product in accordance with the present invention that is obtained by casting a raw material into a raw material for forging and by forge-pressing the raw material for forging, the intended final product is, for example, a vehicular suspension part, which is used in environments that are not necessarily good, so that top priority is given to the mechanical properties and corrosion resistance. The mechanical properties and corrosion resistance should be not lower than those of the conventional forging, for example, a forging manufactured by using A6061 alloy as a raw material. For this reason, the castability, that is, the fluidity and casting defect are not superior to those of the conventional casting material. Therefore, if a mold having a shape too close to the shape of final product is used in a step of obtaining the raw material for forging in order to attach importance excessively to the increase in efficiency in the manufacturing process, a crack, internal defect, etc. are liable to develop, and also the strength cannot be obtained by the forging effect. Therefore, the compression ratio should preferably be kept in the above-described range.

Next, the casting obtained by being molded by using the casting apparatus, that is, the raw material for forging is heated to a surface temperature of about 380 to 520°C and is subjected to closed die forging by using a forging press, by which a rough forging is obtained. The rough forging is heated again to a surface temperature of about 380 to 520°C after being cooled and is subjected to closed die forging for finishing by using a forging press, by which a finished forging is obtained. The finished forging is subjected to clipping flash and heat treatment such as T6 treatment, by which a forged product is obtained. For example, when a steering knuckle, which is one of automobile suspension parts, is manufactured, the load of forging press is about 2600 to 2800 tons for rough forging and about 3200 to 3800 tons for finish forging. By the above-described manufacturing process, the aluminum casting forged product in accordance with the present invention can be obtained.

In the present invention, flash produced by forge-pressing and clipping flash in the manufacturing process in accordance with the present invention are collected by a flash removing machine, and can be reused as a raw material for the aluminum casting forged product in accordance with the present invention. Therefore, all of the raw materials for forging are recycled, and they are not disposed of as waste or are not used as a raw material for an inexpensive forging.

In the manufacturing method for the aluminum casting forged product in accordance with the present invention, after the raw material is melt to obtain molten metal, the mold for casting is brought closer to the shape of product as compared with the conventional raw material for forging so that the compression ratio is about 18 to 60% when the shape of final forged product is taken as 100% while the strength improving effect due to forging is achieved, by which the pressing is made easy. Therefore, unlike the conventional forging process, steps of extruding, cutting, heating, rough forging, finish forging, and clipping flash are not observed, and thus the manufacturing process can be simplified, by which the manufacturing cost can be reduced.

The following is a description of examples of the present invention, but the present invention is not limited to these examples.

[Example 1]

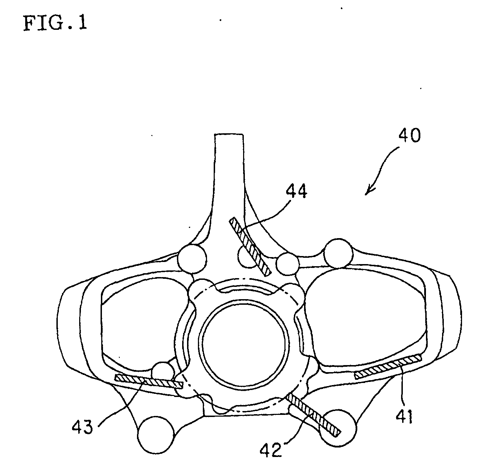

Fig. 1 is a side view showing one example of the aluminum casting forged product in accordance with the present invention, showing a steering knuckle 40, which is an automobile part.

A small amount of manganese was added to scraps of A6061 alloy to prepare a raw material containing 0.6 wt% silicon, 0.8 wt% magnesium, 0.2 wt% copper, and 0.03 wt% manganese. Using this raw material, the steering knuckle 40 having a shape shown in FIG 1 was manufactured by observing the steps described below.

After the raw material was melted at a molten metal temperature of 728°C to obtain molten metal, a raw material for forging having a shape with a compression ratio of 30% when the shape of final steering knuckle 40 was taken as 100% was molded at a mold temperature of 100°C. Next, closed die forging was performed by using a forging press at a rough forging temperature of 395°C (surface temperature) by applying a rough forging load of 2770 tons to obtain a rough forging. Then, the rough forging was subjected to closed die forging again using a forging press at a finish forging temperature of 460°C (surface temperature) by applying a finish forging load of 3260 tons. Finally, the finish forging was trimmed, and after solution heat treatment was done as T4 treatment by heating the finish forging at 530°C for three hours, the finish forging was cooled. Then, aging treatment was done as T6 treatment by heating the finish forging at 180°C for six hours. Thereby, the steering knuckle 40 was obtained as a product. The temperature condition and load condition are given in Tables 1 and 2, respectively.

Table 1

|  | Molten metal temperature [°C] | Mold temperature [°C] |
|---|---|---|
| Example 1 | 728 | 100 |

Table 1   (continued)

|  | Molten metal temperature [°C] | Mold temperature [°C] |
|---|---|---|
| Example 2 | 720 | 125 |

Table 2

|  | Rough forging | | Finish forging | |
|---|---|---|---|---|
|  | Load [ton] | Surface temperature [°C] | Load [ton] | Surface temperature [°C] |
| Example 1 | 2770 | 395 | 3260 | 460 |
| Example 2 | 2730 | 400 | 3780 | 445 |

From the steering knuckle 40, which is the obtained product, specimens were cut out in positions 41 to 44 shown in Fig. 1, and tensile strength, proof stress, and elongation were measured as mechanical properties. The measurement result is given in Table 3.

Table 3

|  |  | Tensile strength [N/mm$^2$] | Proof stress [N/mm$^2$] | Elongation [%] | Remarks |
|---|---|---|---|---|---|
| Example 1 | 41 | 342 | 310 | 17.9 |  |
|  | 42 | 335 | 307 | 12.7 |  |
|  | 43 | 352 | 319 | 15.1 |  |
|  | 44 | 339 | 308 | 10.8 |  |
| Example 2 | 41 | 340 | 313 | 17.5 |  |
|  | 42 | 336 | 306 | 13.1 |  |
|  | 43 | 345 | 311 | 10.2 |  |
|  | 44 | 336 | 303 | 10.6 |  |
| Mean value | | 340.6 | 309.6 | 13.49 |  |
| Maximum value | | 352 | 319 | 17.9 |  |
| Minimum value | | 335 | 303 | 10.2 |  |
| Specified value | | 305 or higher | 245 or higher | 10 or higher | A6061FD |

[Example 2]

A steering knuckle was manufactured in the same way as in Example 1 except that the temperature condition and load condition were changed so that the molten metal temperature is 720°C, the mold temperature is 125°C, the rough forging temperature is 400°C, the rough forging load is 2730 tons, the finish forging temperature is 445°C, and the finish forging load is 3780 tons, and the mechanical properties were examined.
The temperature condition and load condition are given in Tables 1 and 2, respectively, and the measurement result of mechanical properties is given in Table 3.
The results of Examples 1 and 2 reveal that the mechanical properties of the aluminum casting forged product in accordance with the present invention were kept at values higher than the values specified for A6061FD manufactured by the conventional forging process in terms of all of tensile strength, proof stress, and elongation.

[Example 3]

The same raw material as that in Example 1 was prepared, and a columnar specimen was manufactured. After the raw material was melted at a molten metal temperature of 728°C to obtain molten metal, a raw material for forging was molded. At the time of forging, the compression ratio was changed to 5%, 12%, 15%, 18%, 27%, 30%, 37%, 41%, 45%, 51%, 60%, 67%, 73%, and 80%, and fourteen products were manufactured.

Fig. 2 (a) is a view showing a difference in shape for each compression ratio. For these raw materials (columnar specimens) with a different shape, the interior of each specimen was observed.

As a result, as shown in Fig. 2(b), for the raw materials for forging with a compression ratio of 13% or less, an internal defect remained. All of the raw materials for forging with a compression ratio of 18% or more were good in quality without defects as shown in Fig. 2(c).

Industrial Applicability

As described above, according to the present invention, there is provided the aluminum casting forged product which has high tensile strength, proof stress, and elongation as a thick-wall aluminum product, has high corrosion resistance and higher mechanical properties than those of the conventional material for casting forge, is high in quality without defects, and is low in cost because of simplified manufacturing process and high productivity, the aluminum casting forged product being manufactured by using the aluminum alloy for casting forge in which useless raw material for forging is reused. Since, for example, a lightweight and less costly vehicular suspension part is provided as the aluminum casting forged product, the fuel consumption of automobile vehicle etc. is decreased by the reduction in weight of vehicle. As a result, an effect that the amount of emitted carbon dioxide is decreased, which contributes to the prevention of global warming can be achieved.

**Claims**

1. An aluminum alloy for casting forge which is cast into a raw material for forging,
   **characterized in that** it contains 0.2 to 2.0 wt% of silicon, 0.35 to 1.2 wt% of magnesium, 0.1 to 0.4 wt% of copper, and 0.01 to 0.08 wt% of manganese.

2. An aluminum casting forged product which is manufactured by forging after being cast,
   **characterized in that** it contains 0.2 to 2.0 wt% of silicon, 0.35 to 1.2 wt% of magnesium, 0.1 to 0.4 wt% of copper, and 0.01 to 0.08 wt% of manganese.

3. A preformed product which is cast by using an aluminum alloy for casting forge according to claim 1, and of which compression ratio is 18 to 60% when a shape of a final product is taken as 100%.

4. A vehicular suspension part manufactured by using an aluminum alloy for casting forge according to claim 1.

5. The preformed product according to claim 3, wherein said final product is a vehicular suspension part.

6. A manufacturing method for an aluminum casting forged product containing 0.2 to 2.0 wt% silicon, 0.35 to 1.2 wt% magnesium, 0.1 to 0.4 wt% copper, and 0.01 to 0.08 wt% manganese,
   **characterized by** comprising
   a molten metal step of obtaining molten metal by melting a material for forging at a temperature of about 680 to 780°C;
   a casting step of obtaining a raw material for forging by casting said molten metal at a mold temperature of about 60 to 150°C;
   a rough forging step of obtaining a rough forging by heating said raw material for forging to a surface temperature of about 380 to 520°C and forging said raw material;
   a finish forging step of obtaining a finished forging by heating said rough forging to a surface temperature of about 380 to 520°C and forging said rough forging; and
   a clipping flash step of obtaining a final product by removing flash from said finished forging.

7. The manufacturing method for an aluminum casting forged product according to claim 6, wherein said raw material for forging includes useless flash produced at the time of forging as a raw material.

8. The manufacturing method for an aluminum casting forged product according to claim 6, wherein a compression ratio of a shape of said raw material for forging is 18 to 60% when a shape of a final product is taken as 100%.

9. A vehicular suspension part manufactured by a manufacturing method for an aluminum casting forged product according to any one of claims 6 to 8.

FIG.1

FIG.2(a)

5% 12% 15% 18% 27% 30% 37%

50

21 22

50

41% 45% 51% 60% 67% 73% 80%

FIG.2(b)

21

50

FIG.2(c)

22

EP 1 380 662 A1

FIG.3

# EP 1 380 662 A1

## INTERNATIONAL SEARCH REPORT

International application No.

PCT/JP02/02397

### A. CLASSIFICATION OF SUBJECT MATTER

Int.Cl⁷ C22C21/02, 21/06, C22F1/05, B21J5/00, 5/02, B21K1/26

According to International Patent Classification (IPC) or to both national classification and IPC

### B. FIELDS SEARCHED

Minimum documentation searched (classification system followed by classification symbols)

Int.Cl⁷ C22C21/02, 21/06, C22F1/05, B21J5/00, 5/02, B21K1/26

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| P,X | JP 2001-107168 A (Kobe Steel, Ltd.), 17 April, 2001 (17.04.01), Claims; Par. Nos. [0002] to [0003], [0007], [0034], [0051] to [0057] (Family: none) | 1-9 |
| X | JP 11-12675 A (Kobe Steel, Ltd.), 19 January, 1999 (19.01.99), Par. Nos. [0002], [0004], [0016], [0018] (Family: none) | 1-6,8,9 |
| Y | | 7 |
| Y | JP 57-194226 A (Cegedur Societe de Transformation de L'aluminium Pechiney), 29 November, 1982 (29.11.82), Page 2, upper left column, line 12 to lower left column, line 3; page 3, lower left column, line 9 to lower right column, line 3 & EP 69026 A | 7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 June, 2002 (06.06.02) | 18 June, 2002 (18.06.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

13